# EUROPEAN PATENT SPECIFICATION

(11) **EP 3 254 347 B1**
(45) Date of publication and mention of the grant of the patent: **25.03.2020**
(21) Application number: 16717677.5
(22) Date of filing: 03.02.2016
(51) Int. Cl.: H02B 1/056, H01H 71/08

(54) **CONSUMER UNITS, RECEPTACLES FOR CONSUMER UNITS AND CONSUMER UNIT SYSTEMS**
VERBRAUCHEREINHEITEN, BEHÄLTER FÜR VERBRAUCHEREINHEITEN UND VERBRAUCHEREINHEITSSYSTEME
UNITÉS CONSOMMATRICES, CONNECTEURS FEMELLES POUR UNITÉS CONSOMMATRICES ET SYSTÈMES D'UNITÉ CONSOMMATRICE

(30) Priority: 05.02.2015 GB 201501879; 05.02.2015 GB 201509276
(43) Date of publication of application: 13.12.2017
(73) Proprietor: Symmetrical Power Ltd., Liverpool, Merseyside L8 0RS (GB)
(72) Inventor: SINGH, Prem, Liverpool, Merseyside L8 0RS (GB)
(74) Representative: Hutchinson, Thomas Owen
(86) International application number: PCT/GB2016/050242
(87) International publication number: WO 2016/124916

(56) References cited:
- GB-A- 2 310 768
- GB-A- 2 360 876
- GB-A- 2 446 841

## Description

This invention relates to improvements in and relating to consumer units, which are also known as "distribution boards", "circuit breaker panels" and "fuse boxes" or consumer units. The terms are used interchangeably herein.

The present invention relates to electrical distribution boards, and in particular, but without limitation, to electrical distribution boards that can mount an array of circuit breakers and/or one or more RCD/s and/or one or more Main isolator switch (also known as an "incomer") to switch off electrical power to a detected area in an emergency or at other necessary times. The invention is also concerned with new technology that is applicable to both single phase boards for domestic/light commercial use and additional new technology for use in a three phase and neutral (TP&N) distribution boards which are also installed in different types of premises and in heavy commercial or industrial installations.

Distribution boards are generally installed wherever electricity is consumed and may often be found in central locations within buildings. The boards often serve as the point at which electricity is fed into the arrangement to many different downstream circuits within a building from an upstream conductor supplying electricity into the building.

Distribution boards generally enclose a plurality of electrical circuit breakers, each of which connects the upstream conductor/s to a downstream circuit conductor/s. Circuit breakers are automated switches which are designed to automatically disconnect so as to protect a downstream electrical circuit from damage caused by an overload, short circuit, and or persons in danger from earth leakage current. If and when the circuit breakers are activated, they can then be re-connected manually, generally by flicking a manual switch/actuator, or automatically in certain cases.

Distribution boards and their associated circuit breakers are supplied in varying sizes and capacities, ranging from those used in domestic households/mobile dwellings, static caravans, to temporary and portable installations used in construction sites or public events to those used in commercial and industrial applications. Most common forms of circuit breaker/s/interrupters used in domestic or commercial applications are the Miniature Circuit Breaker or MCB, Residual Current Device or RCD as well as the Residual Current Circuit Breaker with over current Protection or RCBO.

There are also fuse holders for higher voltage systems that house high breaking capacity fuses. All of the said circuit breakers are mounted by removing the distribution board cover attaching the breaker/s and holders onto a DIN rail assembly and pushing up a securing clip.

Distribution boards generally include a main switch/incomer/isolator/MCCB between the upstream conductor and all of the circuit breakers of the distribution board. This enables the supply of electricity to the distribution board to be interrupted, for example, during maintenance of the distribution board.

Many modern distribution boards include a RCD, which is a device that disconnects a downstream circuit/s when it detects that the flow of current between the line conductor and the neutral conductor in the circuit is not balanced, for instance, imbalance of current could represent leakage through the body of a person who is grounded and could be touching an energised part of a particular circuit, which can result in a lethal electric shock: the RCD would then disconnect the line and neutral to the circuit by tripping within milliseconds and with current that typically does not exceed 30mA. An RCD is generally required in addition to the circuit breakers and so is typically wired between the isolator switch and other circuit breakers (usually MCBs). The RCD output terminal protects one or more MCB breakers. MCB/s that are not connected to the output terminals of an RCD will only provide overload and short circuit protection, and when tripped will only isolate the line terminal (unless a double pole isolator is used). There are MCB/s and RCBO/s available that can offer double pole isolation, which are generally double the size of single pole breakers and generally occupy two "ways" of the distribution board.

Depending on, and according to, relevant regulations, most downstream circuits require earth leakage protection offered by a RCD, for example to circuits supplying appliances in an environment including water, such as outdoor areas, bathrooms, kitchens, swimming pools, etc. Distribution boards in which some circuits are protected by an RCD and some circuits that are only protected by MCB/s are known as split load distribution boards. Modern split load models incorporate at least two RCD's for a single phase installation.

For each RCD more than one MCB can be connected to the bus bar of the RCD. When the RCD detects an earth leakage fault it trips out and all of the MCB/s that are connected to that particular RCD, will lose power supply, thus terminating power to every circuit connected to that particular RCD.

This could include lighting circuits, freezers and fire alarms etc. To mitigate this problem it is well known to utilise an RCBO which acts a combined RCD and MCB, and can be installed in place of the MCB. This arrangement may protect one or more circuits independently of the RCDs because the upstream line and neutral for this device is taken directly from the output terminals of the main switch/isolator supply and normally with the addition of a common earth connection (some RCBOs do not have an earth/ground wire), the output line and neutral is then connected to the circuit requiring independent protection.

Planning in such known distribution boards is essential because it must be known where the supply line bus bar should be cut, how the board is to be configured and in which order, that is to say, which output conductor of the main switch/RCD bus bar is to be connected to supply input power to MCBs and RCBOs, which must be done prior to cutting of bus bars. Also the circuit to which protection is being provided for may require a higher start-up current, for example the circuit could need a type 'C' MCB or RCBO as opposed to a type 'B', therefore planning and retrospective changes can be costly, inconvenient and time consuming. In addition to this, some tasks as described above must also be done on a three phase and neutral installation (TP&N), it is necessary once again to design and plan which output circuits require MCB or RCBO or separate RCD protection. Furthermore, it is also necessary to balance the system and connect a circuit to the appropriate phase which can be L1, L2 or L3, to ensure that the total load difference over the three phases is balanced or arranged to suit the best power load arrangement - essentially the ratio of the power shared amongst the three phases preventing overload of the conductors and may also provide an increased power factor normally associated with TP&N distribution systems.

Current distribution boards allocate electricity to many downstream circuits firstly by connection of lines and neutral conductors of the supply/input conductors which are wired into the main isolator switch and/or RCD. The output of the said components then provide the upstream supply to the RCBOs and or MCBs, and then the downstream circuits are connected to the output terminals of the said breakers which now offers the required permutations of circuit protection. The downstream circuits require the consumer unit to have many holes to be drilled or 'knocked out' at specific entry points so that the conductors can have access to the inside of the distribution board. Next is the stripping down of the electrical conductors sheathing to expose the individual conductors (of at least two core and earth or ground) and then the removal of some insulation exposing the bare conductor to then be wired and screw tightened to the appropriate clamping terminal of the relevant output line and neutral of the circuit breaker/s and/or terminal bars within the distribution board. This is conscientious work, which has to be accurately and neatly carried out and then has to be checked for standards relating to the industry regulations.

Distribution boards are usually made with internal room for conductors designed to give a degree of flexibility, such as, room to feed and negotiate conductor/s expansion or changes of buildings/requirements over time, all of which may be accommodated within the distribution board.

Known consumer units or distribution boards are described in the following published patent specifications: GB2310768 (Schneider Ltd, 3 September 1997); GB2446841 (Singh, 27 August 2008); and GB2360876 (Wylex Ltd, 3 October 2001).

As will be appreciated from the foregoing, existing consumer units or distribution boards suffer from a number of problems, including:
They require detailed panning during initial installation as modifications later on may be difficult or impossible;
They require a great deal of attention to detail because it is possible to incorrectly install an RCBO, say, in a way requiring an MCB etc. which could lead to incorrect wiring or nuisance trip-outs;
Retrospectively upgrading from MCB protection to RCBO protection (or vice-versa) for a particular way may be difficult, or may require the installation of a separate distribution board/consumer unit alongside the existing one to accommodate the modification when an RCD is required;
The possibility of incorrect installation of under-rated or over-rated circuit protection devices; and
Difficulty working on the distribution board or consumer unit whilst it is live due to the presence of exposed live conductors, and the need to undertake detailed wiring work, which can be fiddly and error-prone.

The invention aims to provide a solution to one or more of the above problems and/or to provide an alternative type of arrangement for consumer units.

Various aspects of the invention are set forth in the appendent claims:
According to an aspect of the invention, there is provided a receptacle according to claim 15.

According to an aspect of the invention, there is provided an electrical consumer unit according to claim 1.

The invention thereby addresses many of the shortcomings of known consumer units by providing an intuitive, plug-and-play system whereby a user, by the appropriate selection of receptacles having pins keyed to appropriate conductors of the consumer unit, can connect almost any of the consumer unit's conductors to any of the ways' terminals in almost any desired permutation. In certain embodiments, the invention also obviates the need for fly leads and other wiring within a consumer unit, and may also enable circuits connected to each way to be configured differently, or post-installation simply by swapping receptacles for those of different types.

In most practical applications, the consumer unit will comprise a plurality of ways, and thus a respective plurality of receptacles will be needed.

Suitably, the receptacle output comprises a set of pins receivable in respective way output sockets, the way output sockets being electrically connected to respective terminals of the way. Such a configuration enables total isolation of a way upon removing the receptacle because the electrical connection between the terminals and the master isolator is broken in two places, i.e. at the receptacle input and at the receptacle output. Further, where the receptacle comprises input pins corresponding to the live and neutral conductors of the consumer unit, removal of the receptacle results in double pole isolation of the way, which is extremely beneficial in certain circumstances.

Further, by providing a set of pins, the receptacle can be "keyed" to different conductors of the consumer unit, for example, to L1, L2 or L3 (where a three-phase system is used), to "direct" or "RCD-protected phases (where a split load consumer unit is employed), or to 120V or 240V (where the consumer unit comprises a transformer). Further, because the electrical protection device is formed as part of the receptacle, the pins will be factory "keyed" thus ensuring that it is not possible, for example, to bypass RCD protection, or to connect 120V circuits to 240V supplies etc..

As alluded to previously, in certain embodiments, the master isolator is electrically connected to a plurality of outputs, each of the plurality of outputs being connected to a respective set of conductors. Such a configuration enables the implantation of split loads very easily, and also, by the "keying" of the receptacles pins, to allocate different ways to different sections of the consumer unit.

For example, the consumer unit may comprise a Residual Current Device (RCD) interposed between one of outputs of the master isolator and its respective set of conductors (another of the sets of the conductors being wired directly to the main isolator). In such a situation, for example, MCB-protected receptacles could be "keyed" to connect only to the RCD output of the master isolator, whereas RCBO-protected receptacles could be "keyed" to connect only to the direct output of the master isolator. Thus, switching a way from master RCD + MCB protection to dedicated RCBO protection could be as straightforward as swapping an MCB receptacle ("keyed" to the RDC output of the main isolator) for an RCBO receptacle ("keyed" to the direct output of the main isolator). This is simply not possible with existing consumer units.

Additionally or alternatively, the consumer unit may comprise a transformer interposed between one or more of the outputs of the master isolator and its respective set of conductors. In this situation, conductors carrying different voltages could be provided. In such a situation, for example, 120V receptacles could be "keyed" to connect only to the stepped-down output of the master isolator, whereas 240V receptacles could be "keyed" to connect only to the direct output of the master isolator. Thus, switching a way from 120V to 240V could be as straightforward as swapping a120V receptacle ("keyed" to the stepped-down output of the main isolator) for 240V receptacle ("keyed" to the direct output of the main isolator). This is simply not possible with existing consumer units.

Additionally or alternatively, the consumer unit may comprise an AC to DC inverter interposed between one or more of the outputs of the master isolator and its respective set of conductors. In such a situation, conductors carrying AC or DC voltages could be provided. In such a situation, for example, 12V DC (e.g. lighting only) receptacles could be "keyed" to connect only to a stepped-down, DC output of the master isolator, whereas 240V AC receptacles could be "keyed" to connect only to the direct output of the master isolator. Thus, switching a way from 12VDC to 240VAC could be as straightforward as swapping a 12VDC receptacle ("keyed" to the stepped-down, DC output of the main isolator) for 240V receptacle ("keyed" to the direct output of the main isolator). This is simply not possible with existing consumer units.

In certain embodiments, the master isolator may comprise a separate phase output for each phase of the mains power supply such that each of the phase outputs is connected to a respective conductor of the consumer unit. In such a situation, a user may be able to select which of the available phases to connect a circuit to by the appropriate selection of a "keyed" receptacle. This could be accomplished, in practice, by the provision of a phase socket corresponding to each of the ways and a phase selector of the receptacle. The phase selector suitably comprises a phase input electrically connectable, when inserted, to a phase socket and a phase output electrically connectable, when inserted, to an input of its respective receptacle, wherein the phase sockets are arranged in a specified pattern and the phase input of the phase selector comprise a phase pin engageable, in use, with a selected one of the plurality of phase sockets such that by the appropriate location of the phase pin on the phase selector, an electrical connection can be made from a selected phase socket of each way to a selected input of the receptacle. Thus, by swapping the phase selector for one of a different "keying", each way can be selectively connected to any of the available phases.

In a more sophisticated embodiment, the phase selector comprises a pull-out loop forming a handle and a conductor electrically connecting the phase input to the phase output, the conductor extending through the handle. This conveniently enables a clamp-on meter to be used to measure the current in any given way, as well as providing a handle for pulling the phase selector out of the consumer unit.

Additionally or alternatively, the phase selector may comprise a current sensor interposed between the phase input and the phase output. This may obviate the need to use a clamp-on current meter. In a yet more sophisticated embodiment of the invention, the phase selector comprises a plurality of phase pins, one for each of the phase sockets, and switch means interposed between each of the phase pins and the phase output. Thus, the switch means can comprise a single-pole, multi-throw switch for selectively connecting, depending on the switch means' position, the connection of the phase output to a selected one of the phase pins. This conveniently avoids having to physically swap phase selectors: phase section thus becoming a matter of moving the positon of the switch means.

In a yet further sophisticated embodiment of the invention, the phase selector comprises an input- output (I/O) port operatively connected to a control unit of the consumer unit. The control unit, where provided, being adapted to control the switching of the switch means of the phase selector. In combination, therefore, the control unit could be configured to monitor the output of the current sensor for each way, and/or the control unit may comprise a processor adapted to balance the loads of the phases by monitoring the load at each way over a period of time, by determining an optimum allocation of ways to each phase, and by switching the phase selector switch means of each phase to the determined optimum configuration.

This is simply not possible with existing consumer units, not least without having to undertake extensive rewiring procedures.

The electrical protection means may comprise any one or more of the group comprising: an RCD, an RCBO, an over-current protection device, a short-circuit protection device, a manual override switch.

In certain embodiments, the invention comprises means for real-time automatic balancing of the phases, for example, using microsecond power loss compensators such as capacitors, arcing chambers/suppressors, etc. to allow for high-current switching whilst a machine or appliance is switching between phases.

In certain embodiments, the receptacle is configured to occupy a plurality of ways of the consumer unit and may thus comprise separate electrical protection means for any two or more of the live, neutral and earth conductors. This permits double pole isolation, which is not possible to incorporate into existing consumer units at present: a separate split load or dedicated consumer unit is required for this, whereas the invention enables this to occur simply by swapping one receptacle for another.

Where a receptacle occupies more than one way of the consumer unit, it is desirable, to avoid incorrect connection of the circuits to the consumer unit, to blank off certain terminals. This can be accomplished, in certain embodiments, by the provision of a lip on the receptacle, which lip is arranged to overlie and obstruct the terminals, the lip comprising an access cut-out aligned with a selected one of the terminals corresponding to a different one of the live and/or neutral and/or earth terminals of the ways.

Where the receptacle occupies more than one way of the consumer unit, the electrical protection means may comprises any one or more of the group comprising: a double pole RCD, a double pole RCBO, a double pole over-current protection device, a double pole short-circuit protection device, a double pole manual override switch, a triple pole RCD, a triple pole RCBO, a triple pole over-current protection device, a triple pole short-circuit protection device, and a triple pole manual override switch.

Conveniently, differently-rated receptacles could be colour coded or otherwise identifiable. However, for added safety and security, receptacles of different ratings could comprise different patterns of ridges or grooves aligned with the insertion direction of the receptacle. These ridges or grooves could be arranged to cooperate with a key having a complementarily arranged pattern of ridges or grooves such that the cooperation of the different patterns of ridges with the key inhibits and/or prevents the insertion of over- and/or under-rated receptacles in each way. This may be used to avoid using under- or over-rated electrical protection devices with different circuits, thus avoiding or reducing dangerous situations or nuisance trip-outs. Suitably, the key is detachable and/or interchangeable so that upon first fix, the ratings of the wiring circuits can be set, or upgraded following subsequent modifications to the circuit.

To improve safety, the conductor and/or phase sockets are recessed into a housing of the consumer unit. This reduces the likelihood of a user's fingers or tools coming into contact with "live" conductors. This may also mean that the consumer unit can be worked on live in relative safety, unlike existing consumer units.

The receptacle may comprise an indicator LED or neon to indicate when current is flowing through the electrical protection means. The LED indicator or neon may have a number of states, e.g. on/off/flashing; or red/amber/green, to indicate different states of the receptacle. For example, the LED or indicator may be illuminated continuously to indicate that current is flowing through the protection device (i.e. board live and protection device "on"); it may flash when there is a voltage at the input, but no voltage at the output (i.e. board live, but protection device tripped-off); or it may be off when there is no voltage at the input (i.e. master isolator switched off). For inspection and test purposes, a receptacle can take the form of a purpose built tester which can be inserted into the any of the socket/s for but not limited to continuity, insulation and earth loop impedance checks.

Possible advantages of the invention include:
When using RCDs, the invention may provide default earth leakage protection regardless of the breaker inserted i.e. MCB or RCBO. This protection may benefit the end user by mitigating the possibility of electric shock. Furthermore, the invention may be able to offer this safety far cheaper than existing consumer units with similar protection.

Whilst RCDs protect the MCB as described, it is possible to simply remove an MCB and insert an RCBO instantly giving the chosen circuit independence along with earth leakage protection. Conversely, should no protection be required, then an override breaker can be inserted by taking a direct supply from the isolator for the MCB or the whole RCD can be overridden to offer bulk overriding.

Currently, there are no TP&N boards available that can accommodate a 4-pole breaker because there is no provision for the neutral input. As such, in known consumer units, a separate feed must be taken before the board to a separate cabinet and this is needed for the use of this 4-pole breaker. By contrast, the invention can easily accommodate a 4-pole breaker anywhere on the board and auto-configure it for the correct input/output power. The invention provides for feeds from a twin live and twin neutral rail input bus bar system, which is what makes default earth leakage protection possible. In certain embodiments, the breakers can be connected to 'at least three lives' and 'at least three neutrals' and 'at least one earth/ground'. By suitably arranging the pins of each breaker, they can be made to connect to appropriate feeds from the consumer unit. Thus, the invention provides for automatic selection of a combination of the said connections dependant on the receptacle/breaker inserted. This is possible because, unlike known three-phase consumer units, which have a single live, single neutral and single earth/ground bus bar; the invention comprises two (or more) main live bus bars and two (or more) main neutral bus bars or twin rails with a continuous earth.

Further, because in embodiments of the invention, the phases can be balanced more easily, this enables a user to benefit from reduced energy consumption because it is known that a properly, or better balanced system consumes less power, overall, than an unbalanced, or less-well-balances system.

A further aspect of the invention provides a consumer unit or receptacle substantially as hereinbefore described, with reference to, and as illustrated in, the accompanying drawings.

Preferred embodiments of the invention shall now be described, by way of example only, with reference to the accompanying drawings in which:
Figure 1 is a schematic circuit diagram for an embodiment of a single phase consumer unit in accordance with the invention;
Figure 2 is a schematic side view/circuit diagram of a first embodiment of a receptacle in accordance with the invention suitable for use with the consumer unit of Figure 1;
Figure 3 is a schematic side view/circuit diagram of a second embodiment of a receptacle in accordance with the invention suitable for use with the consumer unit of Figure 1;
Figure 4 is a schematic circuit diagram for an embodiment of a three phase consumer unit in accordance with the invention;
Figure 5 is a schematic side view/circuit diagram of a first embodiment of a receptacle in accordance with the invention suitable for use with the consumer unit of Figure 4;
Figure 6 is a schematic side view/circuit diagram of a second embodiment of a receptacle in accordance with the invention suitable for use with the consumer unit of Figure 4;
Figure 7 is a schematic side view/circuit diagram of a third embodiment of a receptacle in accordance with the invention suitable for use with the consumer unit of Figure 4;
Figure 8 is a schematic side view/circuit diagram of a fourth embodiment of a receptacle in accordance with the invention suitable for use with the consumer unit of Figure 4;
Figure 9 shows the wiring diagram of the circuit breaker multi socket and how the RCBO or MCB male protruding terminals correspond to the female terminals within the same multi socket and also show the input and output in relation to the Isolator and RCD multi sockets and final output terminals to downstream circuits according to the present invention;
Figure 10 illustrates, schematically, a plug and socket arrangement for a consumer unite whereby a user can select whether and how each of the "split loads" is protected or altered; and
Figure 11 is a schematic exploded view of a distribution board system and jig in accordance with the invention.

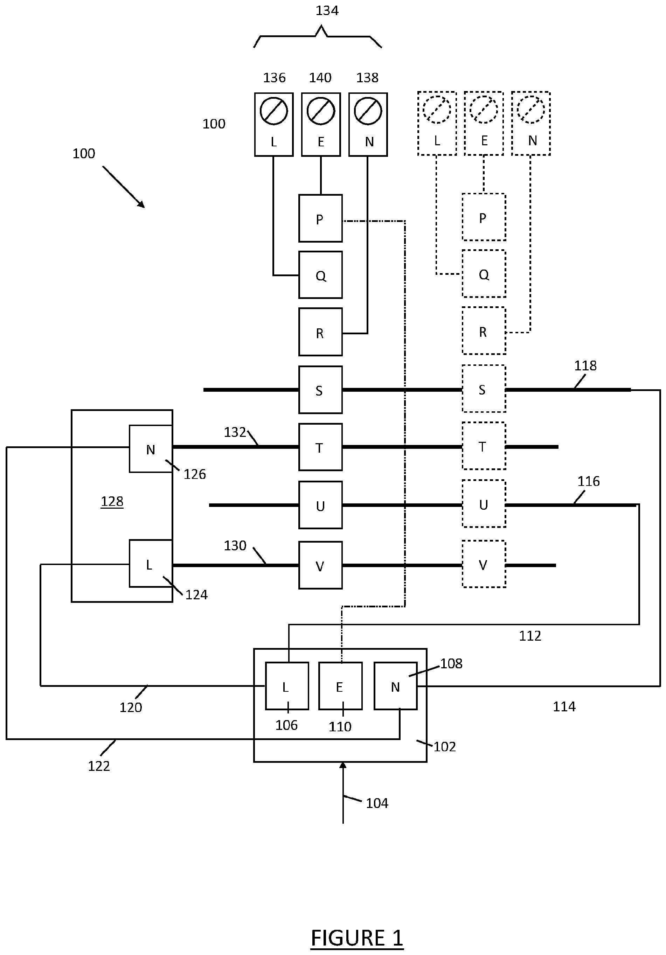

In Figure 1, a single phase consumer unit 100 comprises a master isolator 102, which is connected to a mains power supply 104. The master isolator has live 106, neutral 108 and earth 110, which are connected to conductors within the consumer unit 100 as follows:
A first set of conductors 112, 114 respectively connect the live 106 and neutral 108 terminals of the master isolator 102 to respective live 116 and neutral 118 conductor bars of the consumer unit 100. A second set of conductors 120, 122 respectively connect the live 106 and neutral 108 terminals of the master isolator 102 to respective live 124 and neutral 126 terminals of an intermediate device 128, and thence to respective live and neutral conductor bars 130, 132 of the consumer unit 100.

The conductor bars 116, 118, 130, 132 are arranged in parallel rows within the consumer unit 100 and the consumer unit 100 comprises one or more ways 134 each way 134 having respective live 136, neutral 138 and earth 140 screw terminals for onward connection to circuits of a building or installation. The earth terminal 140 of each way is connected (as shown by the chain-link line in Figure 1) to the earth terminal 110 of the master isolator. As indicated by the dotted way in Figure 1, the consumer unit 100 can have any desired number of ways 134.

Each way 134 comprises a set of sockets, labelled P, Q and R in Figure 1, which respectively connect to the earth 140, live 136 and neutral 138 screw terminals of each way. Each way additional comprises a further set of sockets, labelled S, T, U and V in Figure 1, which respectively connect to the conductor bars 118, 132, 116 and 130 described previously.

Thus, the consumer unit provides an arrangement of sockets P-V for each way 134 that independently provide electrical connections to the way's screw terminals 136, 138, 140; the live 116 and neutral 118 conductor bars connected directly to the live 106 and neutral 109 terminals of the master isolator 102; and the live 130 and neutral 132 conductor bars connected to the live 106 and neutral 109 terminals of the master isolator 102 via the intermediate device 128.

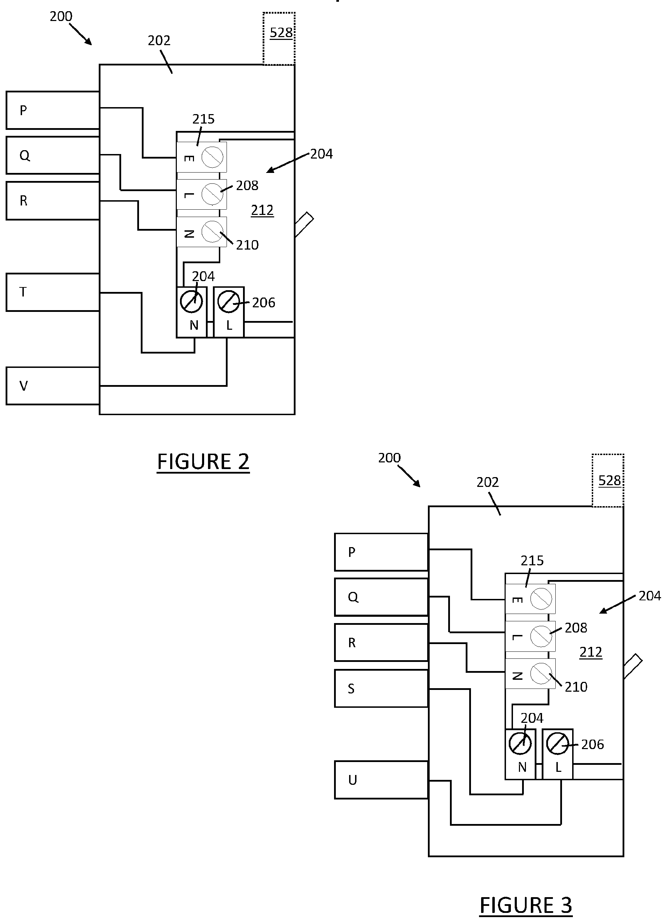

In Figures 2 & 3, a receptacle 200 for the consumer unit 100 previously described comprises a main body portion 202 containing a circuit protection device 204 and a set of pins P, Q, R, S, T, U & V arranged to align with their respective sockets P, Q, R, S, T, U & V of the consumer unit 100. The receptacle comprises a set of internal connections between selected pins and its input live 206, and input neutral 204; as well as output live 208 and output neutral 210 terminals, between which a protection device 212, such as an MCB, RCBO etc. circuit, is wired. An internal earth terminal 215 may also be needed in certain circumstances.

In Figure 2, the protection device 212 comprises an MCB, which requires connection to the master isolator 102 of the consumer unit via an intermediate RCD, in which case, the intermediate device 128 shown in Figure 1 would be an RCD. As such, the receptacle's pins providing connections to the "direct" live U and neutral S terminals of the consumer unit 100 are not needed, and can be omitted from the receptacle 200.

In Figure 3, the protection device 212 comprises an RCBO, which requires a direct connection to the master isolator 102 of the consumer unit 100, in which case, the intermediate device 128 shown in Figure 1 would be a combinations MCB and RCD. As such, the receptacle's pins providing connections to the RCD live V and neutral T terminals of the consumer unit 100 are not needed, and can be omitted from the receptacle 200.

Thus, internally of the receptacle, in this example, the following pin-outs (connections) are made: P to internal earth, V to Q, T to R; or P to internal earth, U to Q, S to R.

As can be appreciated from the foregoing, the "keying" of the pins of the receptacle 200 to selected ones of the sockets of the consumer unit 10 readily enables a selection to be made between various sources of power, e.g. directly from the master isolator 102, or via an intermediate device 128 of the consumer unit. In any case, the keying of the pins ensures that the correct connections are made between the master isolator or the intermediate device 128 and the terminals of the way 134, which are permanently connected to the sockets P, Q and R of the consumer unit. It will be appreciated that the intermediate device 128 of the consumer unit 100 could be any type of intermediate device, such as a step-down or a step-up transformer, in which case the appropriate keying of the receptacle 200 to sockets S & U versus T & V, say, could be used to connect different voltage circuits at each of the ways 134. Additionally or alternatively, the intermediate device 128 of the consumer unit 100 could be an AC-DC converter (e.g. an inverter) or any combination of power-changing of circuit-protecting devices. Likewise, the protection device 212 of the receptacle 200 can be of any desired type, and appropriate connections between the various pins can be made to make this work in all foreseeable circumstances.

The foregoing embodiments are merely illustrative of the invention, and it will be appreciated that any number of conductor bars providing separate supply voltages to each of the ways 134 could be provided, and that the receptacle 200 could likewise comprise an appropriate number of appropriately keyed pins to suit all foreseeable circumstances.

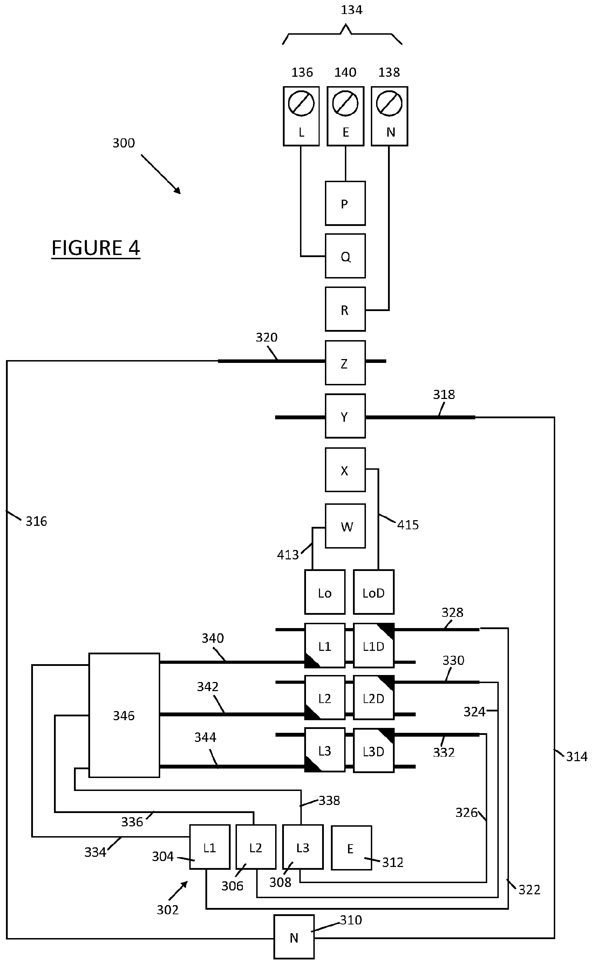

For example, one possible modification of the embodiment described previously is shown in Figure 4, which is a consumer unit 300 for a three phase power supply 302 comprising phase 1304, phase 2 306, phase 3 308, neutral 310 and earth 312 terminals at the main isolator. The neutral terminal 310 is connected via separate conductors 314, 316 to respective direct 318, and indirect 320 conductor bars of the consumer unit 300 and the earth terminal 312 is connected (not shown for clarity) to the earth screw terminals 140 of each of the ways 134.

Likewise, each of the phase terminals 304, 306, 308 is respectively connected, via separate conductors 322, 324, 326 to respective direct conductor bars 328, 330, 332 of the consumer unit 300; and via yet further separate conductors 334, 336, 338 to respective indirect conductor bars 340, 342, 344 of the consumer unit 300, via an intermediate device 346, which, as described previously, could be an RCD, inverter or transformer, etc..

A set of sockets is provided for each way 134, for each of the phase conductor bars, namely an L1 socket connected to the L1 indirect conductor bar 340; an L2 socket connected to the L2 indirect conductor bar 342; an L3 socket connected to the L3 indirect conductor bar 344; an L1D socket connected to the L1 direct conductor bar 328; an L2D direct socket connected to the L2 direct conductor bar 330; and an L3D direct socket connected to the L3 direct conductor bar 332 of the consumer unit 300.

The consumer unit additionally comprises, for each of the (direct or indirect) sets of phase sockets L1, L2, L3; and L1D, L2D, L3D, an output phase socket Lo and LoD, which is connected to a respective phase input socket W, X of the consumer unit 300. The consumer unit 300 additionally comprises direct Y and indirect Z neutral sockets respectively connected to the direct 318 and indirect 320 conductor bars of the consumer unit 300. Output sockets R, Q, P are also provided, as previously described, which respectively connect to the neutral 138, live 136 and earth 140 screw terminals of each way 134 of the consumer unit 300. Although not shown for clarity, the earth screw terminal 140 is additionally connected to the main isolator's earth terminal 312.

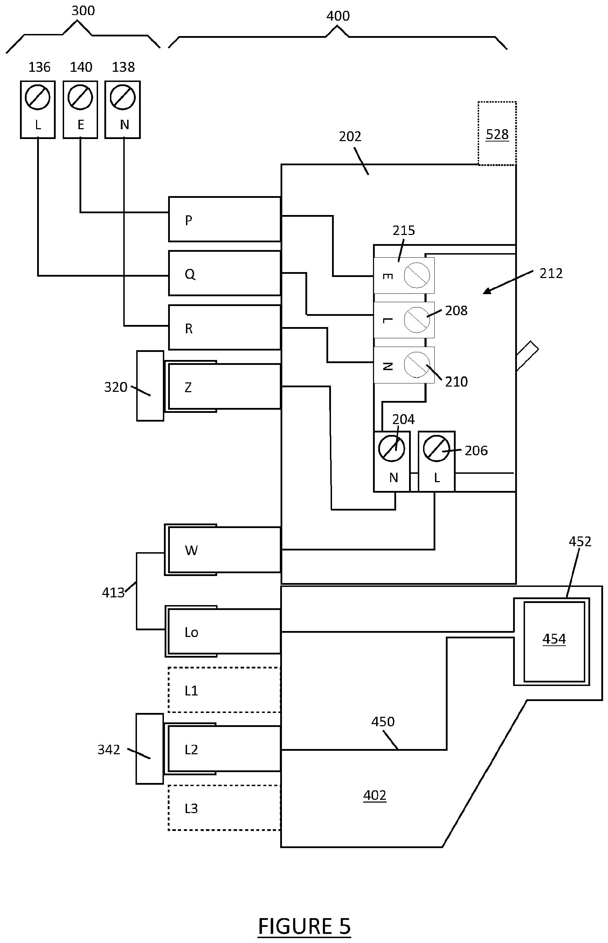

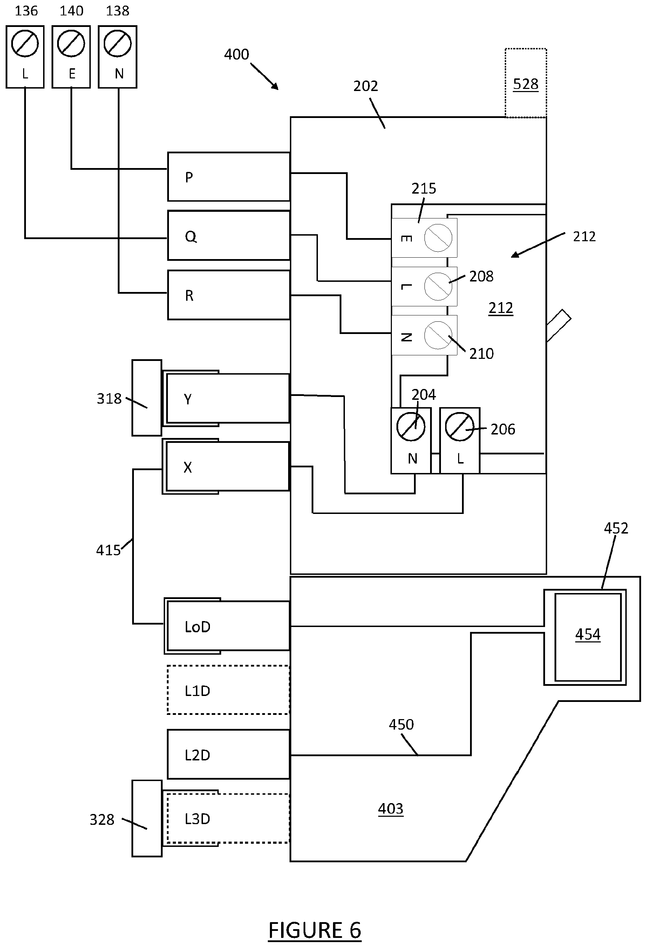

A receptacle 400 suitable for use with the consumer unit 300 is shown schematically in Figures 5 and 6 of the drawings, and comprises, as before, a main body portion 202 containing a circuit protection device 204 and a set of pins P, Q, R, Z, Y, X, W arranged to align with their respective sockets P, Q, R, Z, Y, X & W of the consumer unit 300. The receptacle 400 comprises a set of internal connections between selected pins and the various terminals 215, 208, 210, 204, 206 of the protection device 212.

Unlike the receptacle 200 described previously, the receptacle 400 of this embodiment additionally comprises a phase selector, which in the illustrated embodiment, comprises one of three pull-out plugs 402 having pins Lo, L3, L2, L1 and internal connections 450 that interconnect the Lo socket of the consumer unit to any one of the L1, L2 and L3 sockets of the consumer unit 300; or the LoD socket of the consumer unit to any one of the L1D, L2D and L3D sockets of the consumer unit 300. In the illustrated example of Figure 5, the phase selector pull-out plug 402 comprises an indirect L2 phase selector, which comprises an internal conductor 450 interconnecting the L2 pin (connected to the L2 socket of the consumer unit 300 and the L2 conductor bar 342) to the Lo pin (connected to the Lo socket, and thence to the indirect live socket W of the consumer unit 300). The internal conductor 450 comprises a coil portion 452, which winds around a pull-loop 454 to which a clamp-on current meter can be affixed to measure the current in the way 134.

In Figure 5, the protection device 212 comprises an MCB, which requires connection to the master isolator 302 of the consumer unit 300 via an intermediate device, in which case, the intermediate device 346 shown in Figure 4 would be an RCD.

In this case, the phase selector pull-out plug 402 comprises an indirect L2 phase selector, which comprises an internal conductor 450 interconnecting the L2 pin (connected to the L2 socket of the consumer unit 300 and the L2 conductor bar 342) to the Lo pin (connected to the Lo socket, and thence to the indirect live socket W of the consumer unit 300). In this example, the L3, L2, L1D, L2D, L3D and LoD pins are not needed, and are omitted.

By inserting the phase selector pull-out 402, a user selects to take power for the way from the L2 indirect power supply. Thus, the consumer unit 300 is wired so as to connect 413 the output Lo of the phase selector 402 to the indirect live input W of the receptacle 400. As such, the receptacle's pins X, Y providing connections to the "direct" phase socket LoD and direct neutral conductor bar 318 of the consumer unit 300 are not needed, and can be omitted from the receptacle 400.

Meanwhile, the receptacle 400 comprises an indirect neutral pin Z that engages the indirect neutral socket Z and indirect neutral conductor bar 320 of the consumer unit 300 and the receptacle 400 comprises respective internal connections between its input pins W, Z and the corresponding terminals 204, 206 of the protection device 212; and respective internal connections between its output pins R, Q, P and the corresponding terminals 210, 208 and 215 of the protection device 212, which are connected, in the consumer unit 300, to the neutral 138, live 136 and earth 140 screw terminals of the way 134.

Conversely, in Figure 6, the protection device 212 comprises an RCBO, which requires instead a direct connection to the master isolator 102 of the consumer unit 300.

In this case, the phase selector pull-out plug 402 comprises a direct L1D phase selector, by which a user selects to take power directly off the L1 phase terminal 304 of the master isolator. Thus, in this example, the phase selector 403 comprises an internal conductor 450 interconnecting the L1D pin (connected to the L1D socket of the consumer unit 300 and the L1D conductor bar 328) to the LoD pin (connected to the LoD socket, and thence 415 to the direct live socket X of the consumer unit 300). In this example, the L1, L2, L3, L2D, L3D and Lo pins are not needed, and are omitted.

In this example, therefore, the consumer unit 300 is used to connect 415 the direct LoD output of the phase selector 403 to the direct live input X of the receptacle 400. As such, the receptacle's pins W, Z providing connections to the "indirect" phase socket Lo and direct neutral conductor bar 320 of the consumer unit 300 are not needed, and can be omitted from the receptacle 400.

Meanwhile, the receptacle 400 comprises an direct neutral pin Y that engages the direct neutral socket Y and direct neutral conductor bar 318 of the consumer unit 300 and the receptacle 400 comprises respective internal connections between its input pins X, Y and the corresponding terminals 204, 206 of the protection device 212; and respective internal connections between its output pins R, Q, P and the corresponding terminals 210, 208 and 215 of the protection device 212, which are connected, in the consumer unit 300, to the neutral 138, live 136 and earth 140 screw terminals of the way 134.

It will be noted from Figure 4 that the phase selector sockets of the consumer unit are located side-by-side, and by offsetting the pins of the phase selector plug-ins 402, 403 to the left or right, a user is able to select either the direct or indirect power feeds for the receptacle 400 of each way 134. Similarly, because each receptacle 400 only has the appropriate pins present, it is not possible to form electrical connections, say, between the LoD socket and the indirect live input pin W of the receptacle, or indeed between the Lo socket and the direct live input pin X of the receptacle. Thus, the invention provides a fool-proof way of connecting different types of protection device 212 for each way. However, provided the correct type (direct or indirect) phase selector is used (e.g. for RCBO, or MCB, respectively in this example), it is possible to swap ways between different phases of the main isolator, thus facilitating retrospectively balancing the loads on each of the three phases.

To negate the possibility of the phase selectors being inserted into the incorrect phase selector multi sockets there may be a removable interlock connected to, or integrally formed with, the receptacle 200, 400 in one of two positions to ensure that the phase selectors go into the correct set of phase selector multi sockets for the corresponding breaker. This also acts as a basic ingress protection when either set is not in use. The interlock is suitably removable when the circuit breakers are to be used in single phase distribution boards; this interlocking mechanism is then not required.

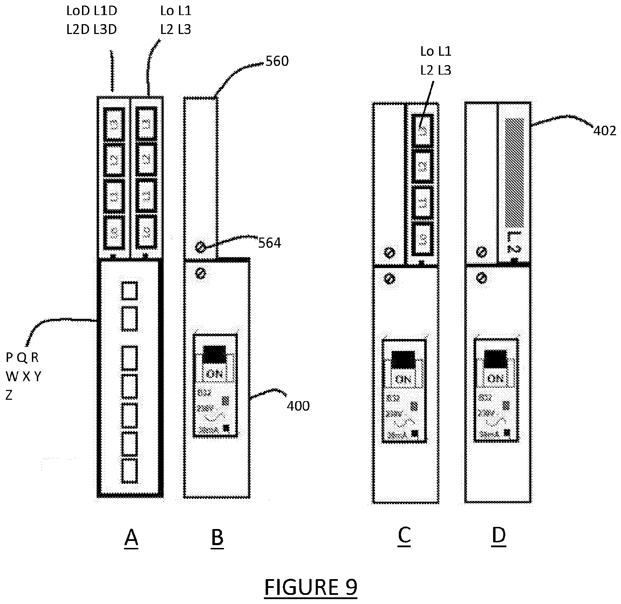

This arrangement is shown, in plan view, in the sequence of drawings of Figure 9, which shows, at Figure 9A what the socket arrangements might look like for a user when looking at an unoccupied way of the consumer unit 300. As can be seen, the sockets can be accessed and a receptacle 400 can be offered up to it. The receptacle comprises a phase selector cover 560, which can be screwed 564 to the main body 202 of the receptacle 400. When the receptacle is inserted, the phase selector cover 560 conceals one of the sets of phase selector sockets, meaning that a phase selector plug-in 402 can only be inserted into the correct position on the consumer unit.

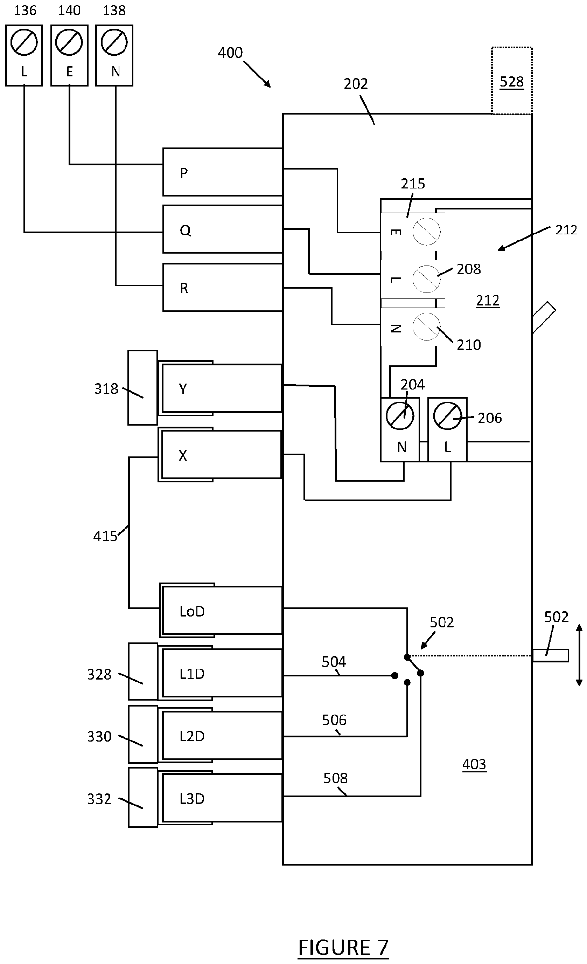

In Figure 7, an alternative type of phase selector 403 is shown, which comprises all four of the Lo, L1, L2 and L3; or the LoD, L1D, L2D and L3D pins, but which comprises a switch 502 providing switched internal connections 504, 506, 508 between the Lo (or LoD) pin and each of the other pins. Thus, by moving the position of the switch 502, switching each way 134 between phase 1, 2 or 3 as the case may be is straightforward. Further, because an indirect phase selector can only be used in conjunction with an indirect protection device 212 (e.g. and MCB) or because a direct phase selector can only be used in conjunction with a direct protection device 212 (e.g. an RCBO), the switched phase selector 500 can be formed integrally with the main body 202 of the receptacle 400.

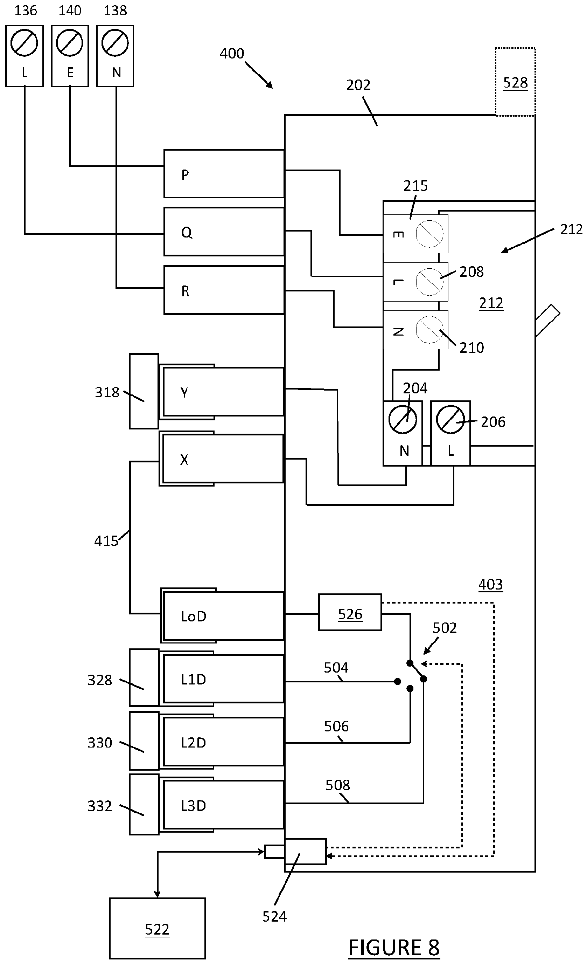

In Figure 8 of the drawings, the switched phase selector 500 now comprises an electronically-controlled switch 502, which is controlled by control voltages applied by an external control circuit 522 of the consumer unit 300, via an I/O port 524. This enables the switching of loads between phases to be automated by the inputs at the I/O port 524. Further, the switched phase selector 500 comprises a current sensor 526 operatively connected to the internal interconnection 415. The I/O port 524 is connected to the current sensor 526 thus permitting the external control circuit 522 to monitor and/or log the current in each way 134 of the consumer unit.

In certain embodiments of the invention, the control circuit 522 comprises a PLC or other on-chip processor, which monitors the loads on each of the phases, and which automatically allocates different ways 134 to different phases L1, L2, L3 to balance the loads between the various phases. A software algorithm may be used, which calculates readings from a central ammeter/data collector to monitor the health of connected loads, in addition to; data collected from current transformers can meter, monitor and inform of the optimum phase arrangement for adjustments to be made manually or automatically.

It will also be noted from Figures 2, 3, 5, 6, 7 and 8 of the drawings, that each of the receptacles 200, 400 comprises a lip portion 528 that, in use, overlies the screw terminals 136, 138, 140 of each way. This prevents accidental contact of the terminals with tools or a user's fingers etc. However, the lip portions 528 can be provided with cut-outs to permit access to the screw terminals. This may be particularly relevant where a receptacle 200, 400 occupies more than one way of the consumer unit, and the cut outs can be used to identify which screw terminals of each way should be used.

It will be appreciated from the foregoing that the breakers and switches can retrospectively be fitted by pushing or plugging into the multi sockets which instantly configure the input and outputs and arrange correct output for downstream circuits without the need to hardwire any terminals. This is advantageous over the conventional method of hardwire because there is no longer a need to plan circuits or cut bus bars; it is also beneficial to the circuit that is connected to the proposed RCBO or MCB push in or plug in breaker, since a double pole isolation can be achieved when the RCBO or MCB is removed. Installing testing replacing and upgrading of RCBO/s and MCB/s is also effortless and immediate.

The female terminals of the multi socket are to be of the interference type/fit, this clamping method ensures good contact and rigid fit of male protruding terminals of the modified component.

The female terminals and the male protruding terminals can be suitably round, square, oblong, diamond, or planer shaped. The said materials for these male protruding terminals can also be used for the said female terminals to ensure maximum current carrying capacity and or combined amperage to cater for maximum demand for extended periods without degradation or heat build-up because of a very low electrical resistance offered by these materials particularly pure copper.

Whilst pluggable/push in socket/s and fuse/breakers are well known in the art, the present invention offers a plurality of multi socket/s, one of which is able to automatically supply the correct input and output connections to the male protruding terminals of either the RCBO/s and MCB/s upon insertion within the same multi socket via its female terminals. The female terminals of the multi socket also have the optional earth/ground terminal to support the earth found on some RCBO/s although not mandatory on every type of RCBO/s.

The receptacles, which accommodate various types of circuit protection device and one of the main advantages of the invention is that they can be instantly plugged into the distribution board and automatically comply with different standards/regulations of various countries, this is also desirable when selecting a correct RCD, as they can vary by a time delay and the tripping current (mA) and time delay action depending on where they are used. All these pluggable devices or receptacles including the RCBO, MCB and fuse holders can be manufactured with reinforcements at certain points to allow for a purpose made tool, to ease removal, alternatively the distribution board according to the present invention may also utilise a push button or lever ejection mechanism.

The distribution board according to the present invention offers significant versatility over conventional boards by eliminating circuit planning, and the order and type of circuit breaker, This advantage is offered through the internal design and configuration of the present distribution board layout and its heavy duty solid conductor/s to be made from pure copper, pure aluminium, copper alloy (brass, bronze), sliver plated copper or aluminium alloy with correct cross sectional area or (CSA). This gives the present invention the maximum current carrying capacity to every multi socket which can satisfy any rated or type of Main Switch, RCBO RCD Solid Link Keys and MCB dependant on the circuit application/requirement
Earth/ground fault loop impedance and circuit start up currents and or power curves can dictate the type of MCBO or RCBO or even RCD, to protect a particular circuit which may need to be removed and replaced in a trial and error method giving the present invention the advantage over conventional boards as hardwiring each time has been replaced by push or plug in action this can lead to considerable time saving of installation, maintenance, faults, changes/upgrades and testing.

The present invention comprises external insulated colour coded and clearly labelled screw clamp terminals to make connections from the circuit breaker output terminals to downstream circuit conductors which include line/s, earth/s, neutral/s, or in any combination depending on final layout. This also permits terminating conductors on the external of the distribution board as opposed to the internal. An alternative method of connection can be to use push in connectors that do not use the screw clamp, but instead relies on a spring type mating terminal that keeps the conductor in a wedged in type fashion and permits its release by depressing the mating terminal using a purpose made tool and then pulling out the conductor whilst depressed. This type of connector would make easy and shorten the installation time whilst also maintaining good connection when terminals are subject to time, temperature changes and vibration.

Incorporated on the external colour coded moulding of the single phase distribution and on the external of the TP&N distribution board are cable management tracks and retainers which keep conductors aligned with final downstream terminals. This method of termination negates internal feeding, negotiating and confusion when terminating conductors within the distribution board thus human error is avoided. These terminals are in close proximity to each other but not touching each other with the addition of a barrier in between each cable management track, which helps prevent incorrect placement of conductors to final downstream circuit.

This design can significantly reduce error and further faults when removal of conductor/s is necessary for example test of installation or fault finding.

Each set of output final screw clamp terminals for the top rail and bottom rail single phase distribution board and TP&N board output final screw clamp terminals are colour coded to correspond to the colour of the insulation on the circuit conductors and are also labelled L (Line) N (Neutral) E (Earth/Ground) and display a number/word of which multi socket, thus giving further error avoidance.

TP&N distribution board according to the present invention has many sets of single phase output final screw clamp terminals but also allows for at least one supply of all three phases for high power machinery/equipment, in this event the output final screw clamp terminals are colour coded to correspond to the colour of the insulation of the circuit conductors. The set of output final screw clamp terminals of the three phase downstream outputs are labelled N (Neutral) L1 (Line 1) L2 (Line 2) L3 (Line 3) each set of three phase output final screw clamp terminals indicate which multi socket, they connect to, this visual aid applies to all multi sockets.

This visual aid mitigates error when terminating conductors and when connecting output final screw clamp terminals and allows for retrospective tracing to circuit when selecting the required breaker for the connected circuit.

A wiring jig is included in the present invention which It is mounted/secured to a vertical surface prior/during first fix of installation which then holds first fix of supply conductors of circuits in an organised fashion, the distribution board is then secured to this during or at the last stage of installation.

The jig allows for the conductors to be fed behind the jig either top sides or bottom then through centre opening. Conductor/s are then pushed through with ease two sets of flexible retaining clips which retains the conductors in order with clear labelling corresponding to the distribution board labelling according to the present invention aiding the initial first and last fix, there is also an alternative jig which has the advantage of adjusting to secondary wall coverings which help with an easy, precise and flush install of the distribution board according to present invention. This offers significant advantages over the prior art distribution board as they do not come with or have a wiring aid.

This apparatus allows for correct directional entry and organisation of conductors and also places conductors ready to be offered to the cable management guides of the main board whose in-built tracks and conductor/s retainer/s are moulded into the actual distribution board. These depressed tracks are moulded or shaped into the external of the distribution board allow for conductor feeding guide prevent misplacement and improve neatness. When conductors are fed through the guides, the conductor overhang is cut according to a marked guide line of the jig wiring accessory/tool, then some of the insulation removed to expose the bare conductor and placed into screw clamp terminals that will accommodate the bare end and varying size of conductors (cross sectional areas or CSA's).

In known distribution boards there is a line bus bar and is only protected by a basic protection cover; this can easily be unintentionally left off or can fall off, leaving the bus bar exposed; another problem is the dividing of the bus bar that requires cutting when configuring the prior art distribution board. The distribution board according to the present invention, is safer, and has no bus bar to cut or configure as it is sealed, readily configured and is terminated externally therefore prevents the installer from accidently coming in contact with the main bus bar and removes the need for cutting or configuring; it is also simplified and its design allows for express installation and termination of conductors with minimum effort for both the three phase and single phase boards; testing of and periodic checks is more safer versatile and faster; with the benefit of isolating a circuit on both poles by pulling out the RCBO or MCB.

The distribution board according to the present invention allows circuit breakers such as the MCB and RCBO to be removed by simply pulling or ejecting out and then pushing the correct type of said breaker in, this may be an RCBO or MCB; also for instance some circuits may demand a type of breaker which requires high start-up current because of a different power curve, and on occasions such as this, it can mean replacing a type 'B' MCB with type 'C'; this retrospective selecting and ability to pull out and plug in, is highly beneficial because the circuit breakers can be fitted in a fraction of the time and without wires or disturbance to other circuit breakers, this flexibility is not offered on prior art distribution boards. These multi sockets are used singularly or in combination to accommodate all breakers 1 pole through to 4 pole of any type or rating

The foregoing explains the principles of operation of the invention, and various practical embodiments of the invention are now described.

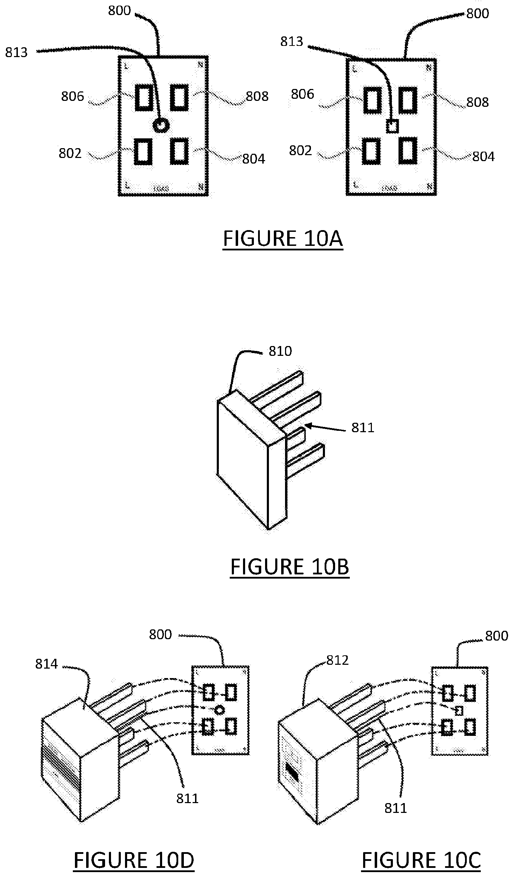

In Figure 10, the consumer unit has a master isolator as previously described, and the board has two sets of conductor bars providing (previously) direct and indirect connection of ways 134 to the main isolator, either directly, or indirectly via an intermediate device 346. However, to improve the versatility of the consumer unit, and to enable a user to select both sets of rails being direct or indirect, or to facilitate swapping an RCD intermediate device, for, say, a transformer or an inverter, each of the sets of conductor bars are connected to the main isolator via a plug and socket arrangement.

In Figure 10A, the consumer unit, for each of the "split loads", comprises a multi-pin socket 800 having inputs 802, 804 connected to the main isolator, and outputs 806, 808 connected to the conductor bars of the consumer unit. To obtain a direct power feed for one of the split loads, a user inserts a "direct" selector plug 810, as shown in Figure 10B, which directly connects, via a suitably arranged set of pins 811, the respective live 802 and neutral 804 inputs of the socket 800 to the corresponding live 806 and neutral 808 outputs of the socket 800 such that power is fed directly from the master isolator to the selected "split load".

On the other hand, if a user wishes to RCD-protect one of the "split loads" of the consumer unit 100, he/she simply needs to replace a "direct" plug 810 for one comprising an RCD protection device 812, as shown in Figure 10C. By inserting the RCD plug into the socket 800, that particular "split load" is now RCD-protected. Similar arrangements can be used for inserting an additional master isolator 814 as shown in Figure 10D, a transformer (not shown), and inverter (not shown) and an AC-DC converter (not shown). It will be noted also from Figure 10A that each of the sockets 800 comprises a centre recess 813, which is shaped so as to permit the insertion of certain types of plug only.

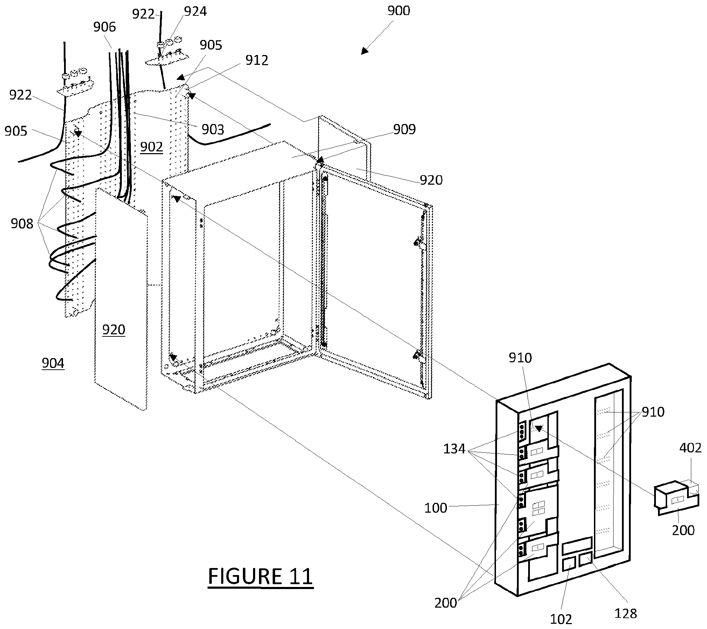

Figure 11 is a perspective view of a distribution board system 900 in accordance with the invention, which comprises a winged mounting plate or jig 902, which is securely affixed to a wall or other mounting surface 904. The jig 900 comprises a flat, central portion 903, which abuts the mounting surface 902, and a pair of stand-off wing portions 905. Wiring 906 leading to/from a set of circuits (not shown) is clipped to holes or perforations in the jig 902 using, for example, clip fasteners or cable ties (not shown). Thus, an installer can neatly arrange the wiring 906 such that the free ends 908 are aligned with the ways 134 of the consumer unit 100.

Next, a user can affix a chassis frame 909 to the jig 902 using screws that locate with bosses 912 of the jig 902. The consumer unit 100 may be already installed in the chassis frame 909, or it may be installed subsequently. Nevertheless, it will be noted that by securing the wiring 906 to the jig 902, with the free ends 908 pre-aligned with the ways 134 of the consumer unit 100, installation is greatly facilitated.

The user can then connect the free ends 908 of the wiring to desired ways 134 of the consumer unit 100, and appropriate breakers 200 according to the invention can be slotted into the consumer unit 100 with their respective pins (not visible) aligning with, and making connections to, the appropriate sockets 910 of the consumer unit 100. By swapping the breakers 200 around, the user can select which ways 134 are connected directly to the incomer 102 (e.g. via an RCBO breaker), or via an RCD 128.

Once installed, side panels 920 can be affixed to the chassis frame 909, which extend rearward to meet the mounting surface 904, thus concealing the wiring 906.

Subsequent to installation, additional circuits 922 can be wired to the consumer unit 100 by feeding new cabling 922 into the distribution board system 900 via glands 924 that feed the additional wiring 922 into the space behind the stand-off wing portions 905 of the jig 902. Thus, by removing the side panels 920, a user is able to subsequently wire-in new circuits, without having to reconfigure the system 900. It will be appreciated by the skilled reader that the distribution board system offer many practical advantages over existing consumer unit systems.

## Claims

1. An electrical consumer unit (100) comprising:
a master isolator (102) comprising:
an input (106, 108, 110) electrically connectable, in use, to a mains power supply;
a first output connected to a first set of conductors (112, 114) respectively connecting live (106) and neutral (108) terminals of the master isolator (102) to respective first live (116) and first neutral (118) conductor bars of the consumer unit (100);
a second output connected to a second set of conductors (120, 122) respectively connecting the live (106) and neutral (108) terminals of the master isolator (102) to respective live (124) and neutral (126) terminals of an intermediate device (128), and thence to respective second live (130) and second neutral (132) conductor bars of the consumer unit (100);
the first and second live (116, 130) and neutral (118, 132) conductor bars being arranged in parallel rows within the consumer unit (100); **characterised by**
a plurality of ways (134) each way comprising:
respective live (136), neutral (138) and earth (140) terminals electrically connectable, in use, to separate electrical circuits;
a set of first sockets (Q, R, P) respectively connected to the said live (136), neutral (138) and earth (140) terminals; and
a set of second sockets (S, T, U, V) respectively connected each of the said first and second live and neutral conductor bars (118, 133, 116, 130);
a removable receptacle (200) comprising:
a receptacle output comprising a first set of pins (Q, R, P) electrically connectable to, when inserted into, the first sockets (Q, R, P);
a receptacle input comprising a second set of pins (S, T, U, V) electrically connectable to, when inserted into, a selected plurality of the second sockets (S, T, U, V); and
electrical protection means (212) interposed between the receptacle input and the receptacle output, wherein:
the set of second sockets are arranged (S, T, U, V) in a specified pattern and by the appropriate location of the input pins (S, T, U, V) on each receptacle (200), separate electrical connections can be made between any one of:
the live (136) and neutral (138) terminals of each way (134) and the live (106) and neutral (108) terminals of the first output of the master isolator (102) directly; or
the live (136) and neutral (138) terminals of each way (134) and the live (124) and neutral (126) terminals of the second output of the master isolator (102) via the intermediate device (128).

2. The electrical consumer unit (100, 300) of claim 1, wherein the master isolator (102) comprises a separate phase output (304, 306, 308) for each phase of the mains power supply and wherein each of the phase outputs is connected to respective sets of first (328, 330, 332) and second (340, 342, 344) conductor bars.

3. The electrical consumer unit (100, 300) of claim 2, wherein each of the respective sets of conductor bars (328, 330, 332, 340, 342, 344) comprises a phase socket (L1D, L2D, L3D, L1, L2, L3) corresponding to each of the ways (134) and wherein the receptacle (400) comprises a phase selector (402) comprising a phase input (L1D, L2D, L3D, L1, L2, L3) electrically connectable, when inserted, to a selected phase socket (L1D, L2D, L3D, L1, L2, L3) (L1D, L2D, L3D, L1, L2, L3) and a phase output (LoD, Lo) electrically connectable, when inserted, to an input (W, X) of the said receptacle (400), wherein the phase sockets (L1D, L2D, L3D, L1, L2, L3) are arranged in a specified pattern and the phase input (L1D, L2D, L3D, L1, L2, L3) of the phase selector (402) comprise a phase pin (L1D, L2D, L3D, L1, L2, L3) engageable, in use, with a selected one of the plurality of phase sockets (L1D, L2D, L3D, L1, L2, L3) such that by the appropriate location of the phase pin (L1D, L2D, L3D, L1, L2, L3) on the phase selector (402), an electrical connection (413, 415) can be made from a selected phase socket (L1D, L2D, L3D, L1, L2, L3) of each way (134) to a selected input (W, X) of the receptacle (400).

4. The electrical consumer unit (100, 300) of claim 3, wherein the phase selector (402) comprises any one or more of the group comprising: a pull-out loop (454) forming a handle and a conductor (450, 452) electrically connecting the phase input to the phase output, the conductor (452) extending through the handle (454); a current sensor (526) interposed between the phase input pin and the phase output pin; and a plurality of phase pins, one for each of the phase socket, and switch means (502) interposed between each of the phase pins and the phase output, wherein the switch means (502) comprises a single-pole, multi-throw switch selectively connecting, depending on the switch means' (502) position, the connection of the phase output (Lo, LoD) to a selected one of the phase input pins (L1D, L2D, L3D, L1, L2, L3).

5. The electrical consumer unit (100, 300) of claim 3 or claim 4, wherein the phase selector (402) comprises an input- output (I/O) port (524) operatively connected to a control unit (522) of the consumer unit (100, 300), the control unit (522) being adapted to control the switching of the switch means (502) of the phase selector (402, 403), and optionally to monitor the output of the current sensor (526).

6. The electrical consumer unit (100, 300) of claim 5, wherein the control unit (522) comprises a processor adapted to balance the loads of the phases by monitoring the load at each way (134) over a period of time, by determining an optimum allocation of ways to each phase, and by switching the phase selector switch means (502) of each phase to the determined optimum configuration

7. The electrical consumer unit (100, 300) of any preceding claim, comprising a plurality of receptacles (200, 400) for a respective plurality of ways (134).

8. The electrical consumer unit (100, 300) of any preceding claim, wherein the intermediate device (128) comprises any one or more of the group comprising: a Residual Current Device (RCD); a transformer; and an AC to DC inverter.

9. The electrical consumer unit (100, 300) of any preceding claim, wherein the receptacle's electrical protection means (212) comprises any one or more of the group comprising: an RCD, an RCBO, an over-current protection device, a short-circuit protection device, a manual override switch.

10. The electrical consumer unit (100, 300) of any preceding claim, wherein the receptacle (200, 400) is configured to occupy a plurality of ways (136) of the consumer unit (100, 300) and comprises separate electrical protection means (212) for any two or more of the live, neutral and earth conductors.

11. The electrical consumer unit (100, 300) of claim 9, wherein the receptacle (200, 400) comprises a lip, which, when inserted, is arranged to overlie and obstruct the terminals, the lip comprising an access cut-out aligned with a selected one of the terminals corresponding to a different one of the live and/or neutral and/or earth terminals of the ways.

12. The electrical consumer unit (100, 300) of any preceding claim wherein receptacles (200, 400) of different ratings comprises different patterns of ridges or grooves aligned with the insertion direction of the receptacle, and wherein each way (134) comprises a key corresponding to the patterns of ridges or grooves of differently-rated receptacles, wherein the cooperation of the different patterns of ridges with the key inhibits and/or prevents the insertion of over- and/or under-rated receptacles in each way, the key being detachable and/or interchangeable.

13. The electrical consumer unit (100, 300) of any of claims 9 to 12, wherein the electrical protection means comprises any one or more of the group comprising: a double pole RCD, a double pole RCBO, a double pole over-current protection device, a double pole short-circuit protection device, a double pole manual override switch, a triple pole RCD, a triple pole RCBO, a triple pole over-current protection device, a triple pole short-circuit protection device, a triple pole manual override switch, and a 4-pole breaker.

14. The electrical consumer unit (100, 300) of any preceding claim, wherein the receptacle (200, 400) comprises an indicator LED to indicate when current is flowing through the electrical protection means (212), the indicator LED being adapted to change colour or flashing state to indicate when a voltage is present at an input, but when no current is flowing through the electrical protection means (212).

15. A receptacle (200, 400) for the consumer unit (100, 300) of any preceding claim, comprising:
a receptacle output comprising a first set of pins electrically connectable to, when inserted into, the first sockets;
a receptacle input comprising a second set of pins electrically connectable to, when inserted into, a selected plurality of the second sockets; and
electrical protection means (212) interposed between the receptacle input and the receptacle output, wherein:
the set of second sockets are arranged in a specified pattern and by the appropriate location of the input pins on each receptacle, separate electrical connections can be made between any one of:
the live and neutral terminals of each way (134) and the live and neutral terminals of the first output of the master isolator (102) directly; or
the live and neutral terminals of each way (134) and the live and neutral terminals of the second output of the master isolator (102) via the intermediate device (128).

## Patentansprüche

1. Elektrische Verbrauchereinheit (100), umfassend:
einen Haupttrennschalter (102), umfassend:
einen Eingang (106, 108, 110), der bei Verwendung mit einer Nennstromversorgung elektrisch verbindbar ist;
einen ersten Ausgang, der mit einem ersten Satz von Leitern (112, 114) verbunden ist, die jeweils einen stromführenden (106) und neutralen (108) Anschluss des Haupttrennschalters (102) mit einer jeweiligen ersten stromführenden (116) und ersten neutralen (118) Leiterschiene der Verbrauchereinheit (100) verbinden;
einen zweiten Ausgang, der mit einem zweiten Satz von Leitern (120, 122) verbunden ist, die jeweils den stromführenden (106) und neutralen (108) Anschluss des Haupttrennschalters (102) mit einem jeweiligen stromführenden (124) und neutralen (126) Anschluss eines Zwischengeräts (128) und somit mit einer jeweiligen zweiten stromführenden (130) und zweiten neutralen (132) Leiterschiene der Verbrauchereinheit (100) verbinden;
wobei die erste und zweite stromführende (116, 130) und neutrale (118, 132) Stromschiene in parallelen Reihen innerhalb der Verbrauchereinheit (100) angeordnet sind, **gekennzeichnet durch**:
eine Vielzahl von Wegen (134), jeder Weg umfassend:
einen jeweiligen stromführenden (136), neutralen (138) Anschluss und Erdanschluss (140), die bei Verwendung mit getrennten elektrischen Schaltungen verbindbar sind;
einen Satz von ersten Buchsen (Q, R, P), die jeweils mit dem stromführenden (136), neutralen (138) Anschluss und Erdanschluss (140) verbunden sind; und
einen Satz von zweiten Buchsen (S, T, U, V), die jeweils mit jeder der ersten und zweiten stromführenden und neutralen Sammelschiene (118, 133, 116, 130) verbunden sind;
einen entfernbaren Stecksockel (200), umfassend:
einen Stecksockelausgang, umfassend einen ersten Satz von Stiften (Q, R, P) die mit den ersten Buchsen (Q, R, P) elektrisch verbindbar sind, wenn sie in diese eingeführt sind;
einen Stecksockeleingang, umfassend einen zweiten Satz von Stiften (S, T, U, V), die mit einer ausgewählten Vielzahl der zweiten Buchse (S, T, U, V) elektrisch verbindbar sind, wenn sie in diese eingeführt sind; und
ein elektrisches Schutzmittel (212), das zwischen dem Stecksockeleingang und dem Stecksockelausgang liegt, wobei:
der Satz von zweiten Buchsen (S, T, U, V) in einem vorgegebenen Muster angeordnet ist und durch die passende Lage der Eingangsstifte (S, T, U, V) auf jedem Stecksockel (200) getrennte elektrische Verbindungen zwischen beliebigen von Folgenden hergestellt werden können:
dem stromführenden (136) und neutralen (138) Anschluss von jedem Weg (134) und dem stromführenden (106) und neutralen (108) Anschluss des ersten Ausgangs des Haupttrennschalters (102) direkt; oder
dem stromführenden (136) und neutralen (138) Anschluss von jedem Weg (134) und dem stromführenden (124) und neutralen (126) Anschluss des zweiten Ausgangs des Haupttrennschalters (102) über das Zwischengerät.

2. Elektrische Verbrauchereinheit (100, 300) gemäß Anspruch 1, wobei der Haupttrennschalter (102) einen getrennten Phasenausgang (304, 306, 308) für jede Phase der Netzstromversorgung umfasst und wobei jeder der Phasenausgänge mit entsprechenden Sätzen von ersten (328, 330, 332) und zweiten (340, 342, 344) Leiterschienen verbunden ist.

3. Elektrische Verbrauchereinheit (100, 300) gemäß Anspruch 2, wobei jede der jeweiligen Sätze von Leiterschienen (328, 330, 332, 340, 342, 344) eine Phasenbuchse (L1D, L2D, L3D, L1, L2, L3) umfasst, die jedem der Wege (134) entspricht, und wobei der Stecksockel (400) einen Phasenwähler (402) umfasst, der einen Phaseneingang (L1D, L2D, L3D, L1, L2, L3), der mit einer ausgewählten Phasenbuchse (L1D, L2D, L3D, L1, L2, L3) (L1D, L2D, L3D, L1, L2, L3) elektrisch verbindbar ist, wenn er in diese eingeführt ist, und einen Phasenausgang (LoD, Lo), der mit einem Eingang (W, X) des Stecksockels (400) elektrisch verbindbar ist, wenn er in diesen eingeführt ist, umfasst, wobei die Phasenbuchsen (L1D, L2D, L3D, L1, L2, L3) in einem vorgegebenen Muster angeordnet sind und der Phaseneingang (L1D, L2D, L3D, L1, L2, L3) des Phasenwählers (402) einen Phasenstift (L1D, L2D, L3D, L1, L2, L3) umfasst, der bei Verwendung in eine ausgewählte der Vielzahl von Phasenbuchsen (L1D, L2D, L3D, L1, L2, L3) eingreifbar ist, sodass durch die passende Lage des Phasenstifts (L1D, L2D, L3D, L1, L2, L3) auf dem Phasenwähler (402) eine elektrische Verbindung (413, 415) von einer ausgewählten Phasenbuchse (L1D, L2D, L3D, L1, L2, L3) von jedem Weg (134) mit einem ausgewählten Eingang (W, X) des Stecksockels (400) hergestellt werden kann.

4. Elektrische Verbrauchereinheit (100, 300) gemäß Anspruch 3, wobei der Haupttrennschalter des Phasenwählers (402) eines oder mehrere der Gruppe umfasst, die Folgendes umfasst: eine Ausziehschleife (454), die einen Griff bildet, und einen Leiter (450, 452), der den Phaseneingang mit dem Phasenausgang elektrisch verbindet, wobei sich der Leiter (452) durch den Griff (454) hindurch erstreckt; einen Stromsensor (526), der zwischen dem Phaseneingangsstift und dem Phasenausgangsstift liegt; und eine Vielzahl von Phasenstiften, eine für jede Phasenbuchse, und ein Schaltmittel (502), das zwischen jedem der Phasenstifte und dem Phasenausgang liegt, wobei das Schaltmittel (502) einen Einzelpol-Mehrfachschalter umfasst, der abhängig von der Position des Schaltmittels (502) die Verbindung des Phasenausgangs (Lo, LoD) mit einem ausgewählten der Phaseneingangsstifte (L1D, L2D, L3D, L1, L2, L3) selektiv verbindet.

5. Elektrische Verbrauchereinheit (100, 300) gemäß Anspruch 3 oder Anspruch 4, wobei der Phasenwähler (402) einen Eingangs-Ausgangs-Port (I/O-Port) (524) umfasst, der mit einer Steuerungseinheit (522) der Verbrauchereinheit (100, 300) betriebsfähig verbunden ist, wobei die Steuerungseinheit (522) angepasst ist, um das Schalten des Schaltmittels (502) des Phasenwählers (402, 403) zu steuern und optional den Ausgang des Stromsensors (526) zu überwachen.

6. Elektrische Verbrauchereinheit (100, 300) gemäß Anspruch 5, wobei die Steuerungseinheit (522) einen Prozessor umfasst, der angepasst ist, um die Lasten der Phasen durch Überwachen der Last an jedem Weg (134) über einen Zeitraum auszugleichen, durch Bestimmen einer optimalen Zuordnung von Wegen auf jede Phase und durch Schalten des Phasenwähler-Schaltmittels (502) von jeder Phase auf die bestimmte optimale Konfiguration.

7. Elektrische Verbrauchereinheit (100, 300) gemäß einem vorhergehenden Anspruch, die eine Vielzahl von Stecksockeln (200, 400) für eine jeweilige Vielzahl von Wegen (134) umfasst.

8. Elektrische Verbrauchereinheit (100, 300) gemäß einem vorhergehenden Anspruch, wobei das Zwischengerät (128) eines oder mehrere der Gruppe umfasst, die Folgendes umfasst: ein Fehlerstrom-Schutzgerät (RCD, Residual Current Device); einen Transformator; und einen AC-DC-Wechselrichter.

9. Elektrische Verbrauchereinheit (100, 300) gemäß einem vorhergehenden Anspruch, wobei das elektrische Schutzmittel (212) des Stecksockels eines oder mehrere der Gruppe umfasst, die Folgendes umfasst: ein RCD, einen RCBO, ein Überstromschutzgerät, ein Kurzschlussschutzgerät, einen manuellen Übersteuerungsschalter.

10. Elektrische Verbrauchereinheit (100, 300) gemäß einem vorhergehenden Anspruch, wobei der Stecksockel (200, 400) konfiguriert ist, um eine Vielzahl von Wegen (136) der Verbrauchereinheit (100, 300) einzunehmen, und ein getrenntes elektrisches Schutzmittel (212) für zwei oder mehr der stromführenden, neutralen Leiter und Erdleiter umfasst.

11. Elektrische Verbrauchereinheit (100, 300) gemäß 9, wobei der Stecksockel (200, 400) eine Lippe umfasst, die, wenn eingeführt, angeordnet ist, um über den Anschlüssen zu liegen und diese abzudecken, wobei die Lippe einen Zugangsausschnitt umfasst, der mit einem ausgewählten der Anschlüsse ausgerichtet ist, der einem anderen der stromführenden und/oder neutralen Anschlüsse und/oder Erdanschlüsse der Wege entspricht.

12. Elektrische Verbrauchereinheit (100, 300) gemäß einem vorhergehenden Anspruch, wobei Stecksockel (200, 400) mit unterschiedlichen Einstufungen unterschiedliche Muster von Erhöhungen oder Rillen umfassen, die mit der Einführungsrichtung des Stecksockels ausgerichtet sind, und wobei jeder Weg (134) eine Führungsnase umfasst, die den Mustern von Erhöhungen oder Rillen von Stecksockeln mit unterschiedlicher Einstufung entspricht, wobei die Zusammenwirkung der unterschiedlichen Muster von Erhöhungen mit der Führungsnase die Einführung von Stecksockeln mit zu hoher und/oder zu niedriger Einstufung in jedem Weg hemmt und/oder verhindert, wobei die Führungsnase lösbar und/oder austauschbar ist.

13. Elektrische Verbrauchereinheit (100, 300) gemäß einem der Ansprüche 9 bis 12, wobei das elektrische Schutzmittel eines oder mehrere der Gruppe umfasst, die Folgendes umfasst: ein Doppelpol-RCD, einen Doppelpol-RCBO, ein Doppelpol-Überstromschutzgerät, ein Doppelpol-Kurzschlussschutzgerät, einen manuellen Doppelpol-Übersteuerungsschalter, ein Dreifachpol-RCD, einen Dreifachpol-RCBO, ein Dreifachpol-Überstromschutzgerät, ein Dreifachpol-Kurzschlussschutzgerät, einen manuellen Dreifachpol-Übersteuerungsschalter und einen 4-Pol-Ausschalter.

14. Elektrische Verbrauchereinheit (100, 300) gemäß einem vorhergehenden Anspruch, wobei der Stecksockel (200, 400) eine Anzeige-LED umfasst, um anzuzeigen, wenn Strom durch das elektrische Schutzmittel (212) fließt, wobei die Anzeige-LED angepasst ist, um eine Farbe oder einen Blinkzustand zu ändern, wenn eine Spannung am Eingang vorliegt, aber wenn kein Strom durch das elektrische Schutzmittel (212) fließt.

15. Behälter (200, 400) für die Verbrauchereinheit (100, 300) gemäß einem vorhergehenden Anspruch, umfassend:
einen Stecksockelausgang, umfassend einen ersten Satz von Stiften die mit den ersten Buchsen elektrisch verbindbar sind, wenn sie in diese eingeführt sind;
einen Stecksockeleingang, umfassend einen zweiten Satz von Stiften, die mit einer ausgewählten Vielzahl der zweiten Buchse elektrisch verbindbar sind, wenn sie in diese eingeführt sind; und
ein elektrisches Schutzmittel (212), das zwischen dem Stecksockeleingang und dem Stecksockelausgang liegt, wobei:
der Satz von zweiten Buchsen in einem vorgegebenen Muster angeordnet ist und durch die passende Lage der Eingangsstifte auf jedem Stecksockel getrennte elektrische Verbindungen zwischen beliebigen von Folgenden hergestellt werden können:
dem stromführenden und neutralen Anschluss von jedem Weg (134) und dem stromführenden und neutralen Anschluss des ersten Ausgangs des Haupttrennschalters direkt; oder
dem stromführenden und neutralen Anschluss von jedem Weg (134) und dem stromführenden und neutralen Anschluss des zweiten Ausgangs des Haupttrennschalters (102) über das Zwischengerät (128).

## Revendications

1. Une unité électrique grand public (100) comprenant :
un isolateur maître (102) comprenant :
une entrée (106, 108, 110) raccordable électriquement, en utilisation, à une alimentation électrique secteur,
une première sortie raccordée à un premier ensemble de conducteurs (112, 114) raccordant respectivement des bornes sous tension (106) et neutre (108) de l'isolateur maître (102) à une première barre conductrice sous tension (116) et une première barre conductrice neutre (118) respectives de l'unité grand public (100),
une deuxième sortie raccordée à un deuxième ensemble de conducteurs (120, 122) raccordant respectivement les bornes sous tension (106) et neutre (108) de l'isolateur maître (102) à des bornes sous tension (124) et neutres (126) respectives d'un dispositif intermédiaire (128), et en conséquence à une deuxième barre conductrice sous tension (130) et une première barre conductrice neutre (132) respectives de l'unité grand public (100),
les première et deuxième barres conductrices sous tension (116, 130) et neutres (118, 132) respectives étant agencées en rangées parallèles à l'intérieur de l'unité grand public (100), **caractérisée par** :
une pluralité de voies (134), chaque voie comprenant :
des bornes sous tension (136), neutre (138) et de masse (140) respectives raccordables électriquement, en utilisation, à des circuits électriques distincts,
une ensemble de premières prises femelles (Q, R, P) respectivement raccordées auxdites bornes sous tension (136), neutre (138) et de masse (140), et
un ensemble de deuxièmes prises femelles (S, T, U, V) respectivement raccordées à chacune desdites première et deuxième barres conductrices sous tension et neutres (118, 133, 116, 130),
une prise amovible (200) comprenant :
une sortie de prise comprenant un premier ensemble de broches (Q, R, P) raccordables électriquement à, lorsqu'elles sont insérées dans, les premières prises femelles (Q, R, P),
une entrée de prise comprenant un deuxième ensemble de broches (S, T, U, V) raccordables électriquement à, lorsqu'elles sont insérées dans, une pluralité sélectionnée des deuxièmes prises femelles (S, T, U, V), et
un moyen de protection électrique (212) interposé entre l'entrée de prise et la sortie de prise, où :
l'ensemble de deuxièmes prises femelles sont agencées (S, T, U, V) selon un modèle spécifié et par la localisation appropriée des broches d'entrée (S, T, U, V) sur chaque prise (200), des raccordements électriques distincts peuvent être établis entre des bornes quelconques parmi :
les bornes sous tension (136) et neutre (138) de chaque voie (134) et les bornes sous tension (106) et neutre (108) de la première sortie de l'isolateur maître (102) directement, ou
les bornes sous tension (136) et neutre (138) de chaque voie (134) et les bornes sous tension (124) et neutre (126) de la deuxième sortie de l'isolateur maître (102) par l'intermédiaire du dispositif intermédiaire (128).

2. L'unité électrique grand public (100, 300) selon la Revendication 1, où l'isolateur maître (102) comprend une sortie de phase distincte (304, 306, 308) pour chaque phase de l'alimentation électrique secteur et où chacune des sorties de phase est raccordée à des ensembles respectifs de premières (328, 330, 332) et de deuxièmes (340, 342, 344) barres conductrices.

3. L'unité électrique grand public (100, 300) selon la Revendication 2, où chacun des ensembles respectifs de barres conductrices (328, 330, 332, 340, 342, 344) comprend une prise femelle de phase (L1D, L2D, L3D, L1, L2, L3) correspondant à chacune des voies (134) et où la prise (400) comprend un sélecteur de phase (402) comprenant une entrée de phase (L1D, L2D, L3D, L1, L2, L3) raccordable électriquement, lorsqu'elle est insérée, à une prise femelle de phase sélectionnée (L1D, L2D, L3D, L1, L2, L3) (L1D, L2D, L3D, L1, L2, L3) et une sortie de phase (LoD, Lo) raccordable électriquement, lorsqu'elle est insérée, à une entrée (W, X) de ladite prise (400), où les prises femelles de phase (L1D, L2D, L3D, L1, L2, L3) sont agencées selon un modèle spécifié, et l'entrée de phase (L1D, L2D, L3D, L1, L2, L3) du sélecteur de phase (402) comprend un broche de phase (L1D, L2D, L3D, L1, L2, L3) pouvant entrer en prise, en utilisation, avec une prise femelle de phase sélectionnée de la pluralité de prises femelles de phase (L1D, L2D, L3D, L1, L2, L3) de sorte que, par la localisation appropriée de la broche de phase (L1D, L2D, L3D, L1, L2, L3) sur le sélecteur de phase (402), une connexion électrique (413, 415) peut être établie à partir d'une prise femelle de phase sélectionnée (L1D, L2D, L3D, L1, L2, L3) de chaque voie (134) à une entrée sélectionnée (W, X) de la prise (400).

4. L'unité électrique grand public (100, 300) selon la Revendication 3, où le sélecteur de phase (402) comprend un élément quelconque ou plusieurs du groupe comprenant : une boucle extractible (454) formant une poignée et un conducteur (450, 452) raccordant électriquement l'entrée de phase à la sortie de phase, le conducteur (452) s'étendant au travers de la poignée (454), un capteur de courant (526) interposé entre l'entrée de broche de phase et la sortie de broche de phase et une pluralité de broches de phase, une pour chacune des prises femelles de phase, et un moyen de commutation (502) interposé entre chacune des broches de phase et la sortie de phase, où le moyen de commutation (502) comprend un commutateur à directions multiples à pôle unique raccordant de manière sélective, en fonction de la position du moyen de commutation (502), le raccordement de la sortie de phase (Lo, LoD) à une broche sélectionnée des broches d'entrée de phase (L1D, L2D, L3D, L1, L2, L3).

5. L'unité électrique grand public (100, 300) selon la Revendication 3 ou 4, où le sélecteur de phase (402) comprend un port d'entrée-sortie (I/O) (524) raccordé de manière opérationnelle à une unité de commande (522) de l'unité grand public (100, 300), l'unité de commande (522) étant adaptée de façon à commander la commutation du moyen de commutation (502) du sélecteur de phase (402, 403), et éventuellement de façon à surveiller la sortie du capteur de courant (526).

6. L'unité électrique grand public (100, 300) selon la Revendication 5, où l'unité de commande (522) comprend un processeur adapté de façon à équilibrer les charges des phases par la surveillance de la charge au niveau de chaque voie (134) sur une période temporelle, par la détermination d'une attribution optimale de voies à chaque phase et par la commutation du moyen de commutation de sélecteur de phase (502) de chaque phase vers la configuration optimale déterminée.

7. L'unité électrique grand public (100, 300) selon l'une quelconque des Revendications précédentes, comprenant une pluralité de prises (200, 400) pour une pluralité respective de voies (134).

8. L'unité électrique grand public (100, 300) selon l'une quelconque des Revendications précédentes, où le dispositif intermédiaire (128) comprend un élément quelconque ou plusieurs du groupe comprenant : un dispositif de courant résiduel (RCD), un transformateur et un convertisseur c.a. vers c.c.

9. L'unité électrique grand public (100, 300) selon l'une quelconque des Revendications précédentes, où le moyen de protection électrique de prise (212) comprend un élément quelconque ou plusieurs du groupe comprenant : un RCD, un RCBO, un dispositif de protection contre les surtensions, un dispositif de protection contre les courts-circuits, un commutateur prioritaire manuel.

10. L'unité électrique grand public (100, 300) selon l'une quelconque des Revendications précédentes, où la prise (200, 400) est configurée de façon à occuper une pluralité de voies (136) de l'unité grand public (100, 300) et comprend un moyen de protection électrique distinct (212) pour deux conducteurs quelconques ou plus parmi les conducteurs sous tension, neutre et de masse.

11. L'unité électrique grand public (100, 300) selon la Revendication 9, où la prise (200, 400) comprend une lèvre, qui, lorsqu'elle est insérée, est agencée de façon à recouvrir et obstruer les bornes, la lèvre comprenant une découpe d'accès alignée avec une borne sélectionnée des bornes correspondants à une borne différente parmi les bornes sous tension et/ou neutres et/ou de masse des voies.

12. L'unité électrique grand public (100, 300) selon l'une quelconque des Revendications précédentes où des prises (200, 400) de différents régimes nominaux comprennent différents modèles de crêtes ou de sillons alignés avec la direction d'insertion de la prise, et où chaque voie (134) comprend une clé correspondant aux modèles de crêtes ou de sillons de prises à régimes nominaux différents, où la coopération des différents modèles de crêtes avec la clé inhibe et/ou empêche l'insertion de prises supérieures et/ou inférieures au régime nominal dans chaque voie, le clé étant amovible et/ou interchangeable.

13. L'unité électrique grand public (100, 300) selon l'une quelconque des Revendications 9 à 12, où le moyen de protection électrique comprend un élément quelconque ou plusieurs du groupe comprenant : un RCD bipolaire, un RCBO bipolaire, un dispositif de protection contre les surtensions bipolaire, un dispositif de protection contre les courts-circuits bipolaire, un commutateur prioritaire manuel bipolaire, un RCD tripolaire, un RCBO tripolaire, un dispositif de protection contre les surtensions tripolaire, un dispositif de protection contre les courts-circuits tripolaire, un commutateur prioritaire manuel tripolaire et un disjoncteur quadripolaire.

14. L'unité électrique grand public (100, 300) selon l'une quelconque des Revendications précédentes, où la prise (200, 400) comprend un indicateur LED destiné à indiquer si un courant circule au travers du moyen de protection électrique (212), l'indicateur LED étant adapté de façon à modifier la couleur ou l'état de clignotement de façon à indiquer si une tension est présente au niveau d'une sortie alors qu'aucun courant ne circule au travers du moyen de protection électrique (212).

15. Une prise (200, 400) destinée à l'unité grand public (100, 300) selon l'une quelconque des Revendications précédentes, comprenant :
une sortie de prise comprenant un premier ensemble de broches raccordables électriquement à, lorsqu'elles sont insérées dans, les premières prises femelles,
une entrée de prise comprenant un deuxième ensemble de broches raccordables électriquement à, lorsqu'elles sont insérées dans, une pluralité sélectionnée des deuxièmes prises femelles, et
un moyen de protection électrique (212) interposée entre l'entrée de prise et la sortie de prise, où :
l'ensemble de deuxièmes prises femelles sont agencées selon un modèle spécifié et par la localisation appropriée des broches d'entrée sur chaque prise, des raccordements électriques distincts peuvent être établis entre des bornes quelconques parmi :
les bornes sous tension et neutres de chaque voie (134) et les bornes sous tension et neutres de la première sortie de l'isolateur maître (102) directement, ou
les bornes sous tension et neutres de chaque voie (134) et les bornes sous tension et neutres de la deuxième sortie de l'isolateur maître (102) par l'intermédiaire du dispositif intermédiaire (128).
